## Europäisches Patentamt
## European Patent Office
## Office européen des brevets

(11) Publication number: **0 228 747**
**A2**

(12) **EUROPEAN PATENT APPLICATION**

(21) Application number: **86202319.9**

(22) Date of filing: **18.12.86**

(51) Int. Cl.⁴: **G 01 N 23/207**

(30) Priority: **31.12.85 US 815349**
**31.12.85 US 815348**

(43) Date of publication of application:
**15.07.87 Bulletin 87/29**

(84) Designated Contracting States:
**CH DE FR GB LI NL**

(71) Applicant: **North American Philips Corporation**
**100 East 42nd Street 9th Floor**
**New York, N.Y. 10017(US)**

(72) Inventor: **Jenkins, Ronald**
**c/o INT. OCTROOIBUREAU B.V. Prof. Holstlaan 6**
**NL-5656 AA Eindhoven(NL)**

(72) Inventor: **Nicolosi, Joseph**
**c/o INT. OCTROOIBUREAU B.V. Prof. Holstlaan 6**
**NL-5656 AA Eindhoven(NL)**

(74) Representative: **Scheele, Edial François et al,**
**INTERNATIONAAL OCTROOIBUREAU B.V. Prof.**
**Holstlaan 6**
**NL-5656 AA Eindhoven(NL)**

(54) **Long wavelength X-ray diffractometer.**

(57) A long wavelength diffractometer is provided with an X-ray tube providing long wavelength radiation to a pre-sample monochromometer which diffracts X-radiation onto a sample. The use of long wavelength X-radiation allows measurement of "d" values of about 2 times greater than normal with very low intrinsic background.

Croydon Printing Company Ltd.

EP 0 228 747 A2

Long wavelength X-ray diffractometer.

The present invention is directed to instrumentation to measure X-ray diffractograms from large unit cell molecules by the use of long wavelength X-radiation.

Traditionally, an X-ray diffracting pattern is measured by way of a single wavelength from a copper anode X-ray tube. Other anode materials can be chosen to yield a suitable range of interplanar spacing values "d" following the relationship $n\lambda = 2d \sin\theta$. In these past devices, the largest value of wavelength used in the conventional systems is 2.29 angstroms which corresponds to $K_\alpha$ radiation from a chromium anode tube.

The present invention is directed to the measurement of "d" values of at least two times greater than in prior systems with a very low intrinsic background.

To this end an apparatus as indicated in the preamble is, according to the invention, characterized as given in Claim 1.

In a preferred embodiment the apparatus is characterized as given in Claim 2 such that X-ray radiation of different wave length is provided from a single tube in a relatively simple manner. With the aid of shutter means in the apparatus a safety interlock for sample changing etc.

With the aid of a double-bent monochromator crystal the efficiency of the apparatus can be increased substantially.

In an apparatus according to the invention an X-ray tube such as disclosed in EP 127230 is very applicable.

In a preferred embodiment the X-ray radiation is controlled by the high voltage applied to the X-ray tube in which in a preferred embodiment at least a rhodium layer forms part of the anode. In order to avoid absorption of the relatively soft X-ray radiation generated in the rhodium anode material an thin exit window of beryllium is applicable.

In a preferred embodiment the X-ray radiation is controlled by the high voltage applied to the X-ray tube in which in a preferred embodiment at least a rhodium layer forms part of the anode. In order to avoid absorption of the relatively soft X-ray radiation generated in the rhodium anode material a thin exit window of beryllium is applicable.

Notably, the additional anode layer formed on the anode of the diffraction tube is chosen so that the ratio of $\lambda_A : \lambda_B$ is an integral number. For example, these materials may provide copper $K_\alpha$ and rhodium $L_\alpha$ lines. In this event, both wavelengths will be diffracted from the two anode materials.

This is carried out in accordance with the present invention by utilizing the $L_\alpha$ characteristic line from a rhodium anode X-ray tube which gives 4.59 angstroms of radiation. The tube uses a special thin window of beryllium to permit transmission of the $L_\alpha$ X-rays. Further, a pre-sample monochromometer in a vacuum diffractometer is provided to receive this X-radiation and diffract it onto a sample.

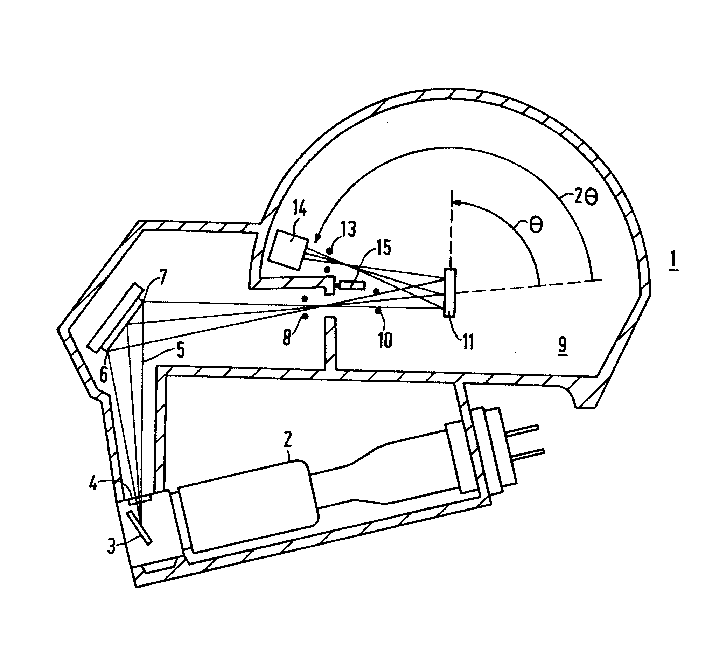

The features of the present invention are described relative to the attached drawing which illustrates without limitation a diffractometer according to the present invention.

The drawing figure shows an X-ray diffractometer 1 including the X-ray tube 2 having a rhodium long time focus anode 3 (shown schematically) providing 4.59 angstrom X-radiation. Radiation 5 passes from a special thin window 4 (a 25 micron beryllium window to permit transmission of the long wavelength radiation) onto a pre-sample monochromometer 6. The X-radiation is diffracted from a surface 7 of the focussing monochromomator crystal through a focussing slit 8, and is directed through the theta compensating slit 10 onto the sample 11 within the vacuum diffractometer chamber 9.

The monochromator 6 may be a doubly-bent germanium single crystal which is fabricated with main surfaces on the (111) atomic planes.

The 4.59 angstrom radiation diffracts from the sample 11 which may be a powdered crystalline sample, and passes through the receiving slit 13 into the detector 14. The receiving slit 13 and detector 14 are coupled with the sample 11 to rotate in the usual 2:1 relationship.

The chamber door 15 may be closed to maintain the monochromator chamber in vacuum and to provide an X-ray shutter mechanism during a sample changing operation.

Rh $L_\alpha$ radiation would diffract from the n=1 order of the monochromator interplanar spacing, whereas Cu $K_\alpha$ radiation would simultaneously diffract from the n=3 order of the monochromator interplanar spacing. By using an energy discriminator in the detector circuit, either one wavelength, or both wavelengths simultaneously by two separate counting circuits, may be used to record the measurements. The diffraction pattern thus obtained with the two X-ray wavelengths would consist of two ranges of d-spacings collected by the same X-ray diffraction system.

This structure provides a relatively simple manner of obtaining at least two diffraction ranges with a single X-ray tube.

CLAIMS

1.       An X-ray diffractometer comprising an X-ray tube
providing long-wavelength X-radiation, a pre-sample monochromometer diffracting the long-wavelength X-radiation,
a sample receiving the long-wavelength X-radiation, and a
detector receiving X-radiation from said sample, wherein
measurement of a range of "d" values of about 2 times
greater than normal is obtained.

2.       An X-ray diffractometer according to Claim 1
comprising an X-ray diffraction tube having a cathode means
for forming an electron beam, composite anode means
including a first anode structure and at least one second
anode layer of a material different from said first anode
structure for diffracting said electron beam into at least
two sets of characteristic wavelengths corresponding to
different "d" values of said composite anode means,
monochromator means for selecting desired wavelengths from
said characteristic wavelengths, goniometer means of controlling orientation of powdered crystalline samples,
and detector means for discriminating and recording at
least two X-ray wavelengths alternatively or simultaneously.

3.       An X-ray diffractometer according to Claim 1
or Claim 2, wherein shutter means are provided for separating said sample from said monochromator, said shutter
means facilitating evacuation time and providing an X-ray
safety interlock during a sample changing operation.

4.       An X-ray diffractometer according to Claim 1, 2
or 3, wherein said X-ray tube comprises a rhodium anode
for production of long wavelength characteristics, and a
thin beryllium exit window.

5.       An X-ray diffractometer according to Claim 1, 2
3 or 4 wherein said monochromator includes a doubly-bent
germanium single crystal fabricated on the (111) atomic
planes.

**0228747**

6.       An X-ray diffraction tube usable in an X-ray diffractometer according to any one of the proceeding Claims, comprising cathode means for forming an electron beam and composite anode means including a first anode structure and at least one second anode layer of a material different from said first anode structure for diffracting said electron beam into at least ·two sets of characteristic wavelengths corresponding to different "d" values of said composite anode means.

7.       An X-ray diffraction tube according to Claim 6, wherein controlling means for controlling ratios of relative intensities of X-radiation produced by said composite anode means are provided, said controlling means operating upon selection of the thicknesses of each anode structure, and said controlling means varying accelerating voltage of said electron beam.

0228747